# FASCICULE DE BREVET EUROPEEN

(11) **EP 3 581 339 B1**
(45) Date de publication et mention de la délivrance du brevet: **29.09.2021**
(21) Numéro de dépôt: 19178364.6
(22) Date de dépôt: 05.06.2019
(51) Int. Cl.: B25J 1/08, B25J 21/00, G21F 7/005

(54) **SYSTEME DE TRANSFERT POUR ENCEINTE ETANCHE COMPORTANT UN DISPOSITIF DE CONNEXION ETANCHE AVEC UN VOLUME CLOS**
TRANSFERSYSTEM FÜR DICHTES GEHÄUSE, DAS EINE DICHTE VERBINDUNGSVORRICHTUNG MIT EINEM GESCHLOSSENEN VOLUMEN UMFASST
TRANSFER SYSTEM FOR A SEALED ENCLOSURE COMPRISING A SEALED CONNECTION DEVICE WITH A CLOSED VOLUME

(30) Priorité: 11.06.2018 FR 1855085
(43) Date de publication de la demande: 18.12.2019
(73) Titulaire: Getinge La Calhene, 41100 Vendôme (FR)
(72) Inventeur: AUBERT, Arthur, 54160 PIERREVILLE (FR); DANIEL, Wenceslas, 41350 VINEUIL (FR)
(74) Mandataire: Brevalex

(56) Documents cités:
- WO-A1-2011/061464
- US-A1- 2013 167 442

## Description

### DOMAINE TECHNIQUE ET ÉTAT DE LA TECHNIQUE ANTÉRIEURE

La présente demande se rapporte à un système de transfert pour une enceinte étanche délimitant un volume clos destiné à être connecté à un autre volume clos, l'enceinte étanche comportant un dispositif de connexion étanche entre les deux volumes clos, à une enceinte comportant un tel système, un procédé d'actionnement dudit système de transfert et un procédé de transfert.

Dans un certain nombre de secteurs industriels, parmi lesquels on citera les secteurs nucléaire, médical, pharmaceutique et agroalimentaire, il est nécessaire ou souhaitable d'effectuer certaines tâches dans une atmosphère confinée, soit afin de protéger le personnel, par exemple de la radioactivité, de la toxicité..., soit au contraire de pouvoir effectuer ces tâches dans une atmosphère aseptique ou exempte de poussière, soit enfin les deux simultanément.

Le transfert d'appareil ou de produit d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte.

Un tel dispositif à double porte muni d'une commande à multiples sécurités est par exemple connu du document FR 2 695 343. Chaque volume est clos par une porte montée dans une bride. Chaque porte est solidarisée à sa bride par une liaison baïonnette et les deux brides sont destinées à être solidarisées l'une à l'autre par une liaison baïonnette. Ce système est également désigné RTP pour « Rapid transfer port » en terminologie anglo-saxonne.

Dans le cas où l'un des volumes clos est formé par un conteneur et l'autre volume par une boîte à gants, le transfert s'effectue de la manière suivante. La bride du conteneur comporte sur sa périphérie extérieure des oreilles destinées à coopérer avec une empreinte de la bride de la boîte à gant. La bride du conteneur est introduite dans la bride de la boîte à gant, le conteneur est orienté de sorte à faire correspondre les oreilles avec l'empreinte. Une première rotation du conteneur suivant l'axe de sa porte permet de solidariser la bride du conteneur à la bride de la boîte à gant par la liaison baïonnette. Au moyen d'une deuxième rotation du conteneur, suivant le même axe et en continuité avec la première rotation, la porte du conteneur est pivotée par rapport au conteneur, assurant à la fois une solidarisation par une autre liaison baïonnette avec la porte de la boîte à gant et une désolidarisation du nouvel ensemble formé par les deux portes accolées vis-à-vis des brides de porte et de boîte à gant. Une commande à poignée située dans la boîte à gant permet de déverrouiller un mécanisme de sécurité et de libérer le passage entre les deux volumes. Dans le cas d'une atmosphère aseptique, les faces extérieures des deux portes étant en contact l'une avec l'autre de manière étanche, elles ne peuvent contaminer l'intérieur des volumes.

Ce type d'enceinte est utilisé pour la fabrication de produits sous atmosphère contrôlée, par exemple dans le domaine pharmaceutique pour la fabrication des médicaments et leur emballage. Des lignes de remplissage sont par exemple disposées dans les enceintes. Des objets de l'extérieur peuvent alors être transférés vers l'intérieur de l'enceinte, par exemple des flacons ou des bouchons. Les objets sont contenus dans un sac muni d'une bride et d'une porte, la bride étant connectée de manière étanche à la bride de l'enceinte. Pour faciliter le transfert des objets, par exemple pour verser ceux-ci dans un bol vibrant de la ligne de remplissage, un système de transfert est mis en œuvre dans l'enceinte, comportant un élément formant un entonnoir, appelé chute et venant se positionner en appuie ou dans la bride de l'enceinte à l'intérieur de l'enceinte pour recevoir les objets qui proviennent du sac et les guider vers leur destination, par exemple le bol vibrant.

Un exemple d'un tel système de transfert est décrit dans le document US 8 950 624. La chute est articulée par rapport à la paroi de l'enceinte entre une position accostée dans laquelle elle accoste la bride de l'enceinte et borde l'ouverture de l'enceinte et une position écartée ou repos, dans laquelle la chute est écartée de l'ouverture de l'enceinte de sorte à ne pas gêner la remise en place de la porte de l'enceinte.

La chute est fixée sur un bras qui est articulé en rotation sur la paroi de l'enceinte. Le bras est actionnable de l'extérieur par un levier. Lorsque l'on souhaite mettre en place la chute sur l'ouverture, le bras est mis en rotation en direction de la paroi, la chute qui forme un ensemble rigide avec le bras est rabattu contre la paroi et vient s'appliquer contre la bride de l'enceinte et border son ouverture. Pour écarter la chute, le bras est déplacé en rotation en sens inverse. Le système de transfert présente un certain encombrement, ce qui impose des conditions dans la configuration du volume de l'enceinte, notamment en termes de dimensions, pour qu'en position de repos, le système de transfert ne gêne pas les manipulations dans l'enceinte.

### RESUME D'EXEMPLES DE REALISATION

C'est par conséquent un but de la présente demande de décrire un système de transfert pour enceinte étanche comportant un dispositif de connexion étanche offrant une plus grande liberté dans la réalisation de l'enceinte.

Le but énoncé ci-dessus est atteint par des moyens de transfert destinés à être montés dans une enceinte étanche comportant un dispositif de connexion étanche à un volume clos, comprenant un arbre monté, par une extrémité longitudinale, articulé en rotation sur une paroi de l'enceinte et une chute montée articulée en rotation au niveau de l'autre extrémité longitudinale du bras, et des moyens pour déplacer le bras en rotation par rapport à la paroi et des moyens pour déplacer la chute en rotation par rapport au bras, entre une position repos de la chute et une position accostée de la chute.

Du fait de la mobilité en rotation de la chute par rapport au bras, celle-ci peut être orientée en position repos de sorte à réduire l'encombrement du système de transfert, et donc à réduire les contraintes dans la conception de l'enceinte, notamment à réduire le volume pour loger le système de transfert, et donc à réduire le volume de l'enceinte.

En d'autres termes, au moins en partie l'orientation de la chute est rendue indépendante de l'orientation du bras es en ajoutant une articulation pivot entre le bras et la chute, ce qui permet de réaliser un système de transfert présentant une grande conformabilité, et donc d'offrir une plus grande liberté dans la conception de l'enceinte.

Dans un mode de réalisation particulièrement avantageux, le système de transfert est tel qu'il maintient la chute dans une orientation donnée par rapport au dispositif de connexion. Par exemple, le bras est articulé sur la paroi portant le dispositif de connexion et le système de transfert comporte des moyens assurant un déplacement de la chute de sorte que la chute garde en permanence une orientation parallèle par rapport au dispositif de connexion et donc à la paroi portant le dispositif. Ainsi en position repos, la chute est rapprochée la paroi et s'étend vers l'intérieur de l'enceinte et non vers l'extérieur de l'enceinte, ce qui ne nécessite donc pas de prévoir un volume supplémentaire uniquement pour loger le système de transfert.

Par exemple les moyens pour assurer le déplacement parallèle du bord d'accostage de la chute comportent des pignons et des arbres.

De manière très avantageuse, l'actionnement du système de transfert est réalisé par un moteur électrique.

Dans un exemple de procédé de transfert, on assure un maintien de la chute dans une orientation fixe lors de son déplacement d'un état repos vers un état d'accostage au dispositif de connexion, dans lequel l'axe de la chute et/ou l'axe du rebord d'accostage de la chute est aligné avec l'axe longitudinal de l'ouverture.

Par exemple, la chute se déplace sensiblement verticalement entre les positions repos et accostée, la chute et le bras pivotent alors simultanément autour de leur axe de rotation et assurant que le rebord d'accostage de la chute reste parallèle à l'ouverture de connexion et de la paroi, dans le cas où l'ouverture et la paroi sont dans le même plan. La chute peut être abaissée pour passer de l'état repos vers l'état accosté et inversement.

L'objet de la présente demande est un système de transfert pour enceinte étanche, ladite enceinte étanche définissant un premier volume clos et comportant au moins un dispositif de connexion étanche destiné à connecté le premier volume clos à un deuxième volume clos, ledit système de transfert étant destiné à être disposé dans ladite enceinte, ledit système de transfert comportant :
- au moins un bras destiné à être monté en rotation sur une paroi de de l'enceinte étanche par l'intermédiaire d'une première articulation en rotation comportant un premier axe de rotation,
- une chute, ladite chute comportant :
   un rebord d'accostage configuré pour coopérer avec le dispositif de connexion étanche; et
   un rebord de déversement, et
- une deuxième articulation en rotation entre le bras et la chute, ladite deuxième articulation en rotation comportant un deuxième axe de rotation.

Selon une caractéristique additionnelle, le système comporte des moyens pour déplacer le bras et la chute en rotation autour du premier axe d'articulation et du deuxième axe d'articulation.

Selon une caractéristique additionnelle, le premier axe de rotation et le deuxième axe de rotation sont parallèles.

Selon une autre caractéristique additionnelle, le système comporte des moyens de maintien d'orientation pour maintenir l'orientation de la chute lors de son déplacement dans ladite enceinte.

En considérant l'axe longitudinal du rebord d'accostage comportant un axe longitudinal, les moyens de maintien d'orientation sont tels que l'axe longitudinal du rebord d'accostage est aligné avec l'axe d'une ouverture du dispositif de connexion et/ou perpendiculaire à la paroi de l'enceinte dans laquelle est monté le dispositif de connexion étanche.

Par exemple, l'orientation des moyens de maintien d'orientation sont tels que le rebord d'accostage se déplace dans des plans parallèles les uns par rapport aux autres.

Selon un exemple de réalisation, les moyens de maintien d'orientation comportent des moyens mécaniques entre un premier axe intérieur s'étendant selon premier axe de rotation, et un deuxième axe intérieur s'étendant selon le deuxième axe de rotation, ledit deuxième axe intérieur étant solidaire en rotation de la chute. Les moyens mécaniques peuvent comporter un arbre intérieur connecté au premier axe intérieur et au deuxième axe intérieur par des renvois d'angle.

Dans un autre exemple de réalisation, les moyens mécaniques comportent une courroie dentée ou une chaine engrenant le premier axe intérieur et le deuxième axe intérieur, le premier axe intérieur et le deuxième axe intérieur étant cannelés.

Le système peut comporter des moyens d'actionnement comprenant au moins un moteur électrique pour mettre en rotation le système autour du premier axe de rotation.

Selon une autre caractéristique additionnelle, le système comporte un premier moteur électrique pour déplacer le bras autour du premier axe de rotation et un deuxième moteur électrique pour déplacer la chute autour du deuxième axe de rotation.

Selon une autre caractéristique additionnelle, le système comporte des moyens de détection de la configuration du système de transfert et/ou de l'état d'ouverture du dispositif de connexion.

La demande porte également sur une enceinte définissant un premier volume clos et comportant un dispositif de connexion étanche à un deuxième volume clos, ledit dispositif de connexion étant monté dans une paroi de ladite enceinte, et comportant un système de transfert de la présente demande.

Par exemple, la première articulation en rotation du système de transfert est fixée sur la paroi dans laquelle est monté le dispositif de connexion.

Selon une caractéristique additionnelle, le dispositif de connexion comporte des moyens de connexion à baïonnette.

La présente demande a également pour objet un système d'isolateur comportant un dispositif de connexion étanche à une unité de confinement, un système de transfert et une autre unité de confinement.

Un objet de la présente demande est également un procédé d'actionnement d'un système de transfert monté sur une paroi d'une enceinte définissant un premier volume clos et comportant un dispositif de connexion étanche à un deuxième volume clos, ledit dispositif de connexion étanche comportant une ouverture d'axe X, ledit système de transfert comportant un chute munie d'un rebord d'accostage d'axe X2 et articulé autour d'un premier axe de rotation et d'une deuxième axe de rotation, ledit procédé d'actionnement comportant une phase de rapprochement de la chute du dispositif de connexion pour mettre la chute dans une position d'accostage, et une phase d'éloignement de la chute du dispositif de connexion pour mettre la chute dans une position de repos, lors de chacune des phases de rapprochement et d'éloignement la chute étant mise en rotation autour du premier axe de rotation et autour du deuxième axe de rotation.

Selon une caractéristique additionnelle, la chute est mise en rotation simultanément autour du premier axe de rotation et du deuxième axe de rotation respectivement.

Selon une autre caractéristique additionnelle, en phase de rapprochement et en phase d'éloignement, l'axe du rebord d'accostage reste parallèle à l'axe du dispositif de connexion.

Selon une autre caractéristique additionnelle, en position repos un rebord de déversement de la chute est orienté vers l'intérieur de l'enceinte.

La présente demande a également pour objet un procédé de transfert d'objet entre un deuxième volume et le premier volume de l'enceinte de la présente demande, comportant :
- une connexion du deuxième volume clos au dispositif de connexion,
- retrait des portes de l'enceinte et du deuxième volume clos.
- mise en place de la chute,
- transfert des objets du deuxième volume clos vers l'intérieur de l'enceinte.
- retrait de la chute,
- remise en place des portes.

La connexion peut être obtenue par rotation du deuxième volume clos par rapport à l'enceinte, de sorte à assurer une connexion entre des brides du deuxième volume clos et du dispositif de connexion et entre une porte du deuxième volume clos et la porte de l'enceinte.

Le procédé peut comporter une détection de la configuration du système de transfert et une détection de la position de portes et une émission d'un signal au système de transfert de rapprocher ou non la chute du dispositif de connexion.

### BRÈVE DESCRIPTION DES DESSINS

Les objets de la présente demande seront mieux compris sur la base de la description qui va suivre et des dessins en annexe sur lesquels:
- la figure 1 est une vue en perspective de l'intérieur d'une enceinte muni d'un système de transfert selon d'un premier exemple de réalisation selon un premier mode de réalisation, le système de transfert étant en position repos,
- la figure 2 est une vue en perspective de l'enceinte de la figure 1, le système de transfert étant en position accostée,
- la figure 3 est une vue en perspective de l'enceinte de la figure 1, le système de transfert étant en position intermédiaire,
- la figure 4 est une vue partiellement coupée de moyens mécaniques de système de transfert de la figure 1,
- la figure 5 est une vue en perspective de l'intérieur d'une enceinte muni d'un système de transfert selon un deuxième exemple de réalisation, le système de transfert étant en position repos,
- la figure 6 est une vue en perspective de l'enceinte de la figure 5, le système de transfert étant en position accostée,
- la figure 7 est une vue en perspective de l'enceinte de la figure 5, le système de transfert étant en position intermédiaire,
- la figure 8 est une vue partiellement coupée de moyens mécaniques de système de transfert selon le deuxième exemple de réalisation,
- la figure 9 est une vue en perspective de l'intérieur d'une enceinte muni d'un système de transfert selon un troisième exemple de réalisation, le système de transfert étant en position repos,
- la figure 10 est une vue en perspective de l'enceinte de la figure 9, le système de transfert étant en position accostée,
- la figure 11 est une vue en perspective de l'enceinte de la figure 9, le système de transfert étant en position intermédiaire,
- la figure 12 est une vue partiellement coupée de moyens mécaniques de système de transfert selon le troisième exemple de réalisation,
- la figure 13 est une représentation schématique d'une vue de dessus en coupe d'une enceinte comportant un système de transfert selon un autre exemple de réalisation,
- la figure 14 est une représentation schématique d'une vue de dessus en coupe d'une enceinte munie d'un dispositif de connexion étanche auquel est connecté un conteneur,
- les figures 15A à 15C sont des représentations schématiques d'autres exemples d'enceinte.

### EXPOSÉ DÉTAILLÉ DE MODES DE RÉALISATION PARTICULIERS

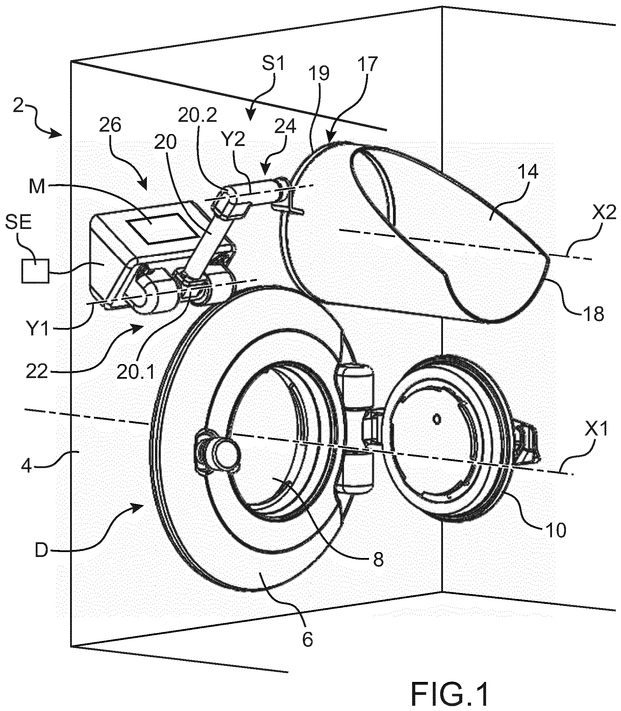

Sur la figure 1, on peut voir un exemple d'enceinte étanche, représentée en transparence, munie d'un système de transfert étanche selon un premier exemple de réalisation d'un premier mode de réalisation.

L'enceinte 2 comporte des parois délimitant un volume étanche. Au moins l'une 4 des parois comporte un dispositif de connexion étanche D à un système étanche extérieur, par exemple une autre enceinte, un conteneur rigide ou un conteneur souple de type sac. Le dispositif D est destiné à permettre de connecter de manière étanche les volumes intérieurs de l'enceinte et au système extérieur et permettre un transfert étanche entre les deux volumes, pour protéger les objets contenus dans les volumes étanches et/ou protéger l'environnement extérieur de ces objets. Par exemple, l'enceinte 2 peut faire partie d'un système d'isolateur, en particulier une zone de confinement de l'isolateur, une zone de confinement stérile ou une zone de confinement radioactive, qui peut être utilisée pour fabriquer des produits dans l'industrie nucléaire, pharmaceutique ou agroalimentaire par exemple.

Des exemples de dispositif de connexion étanche sont décrits dans le document FR 2 695 343 et dans le document US 9 754 691.

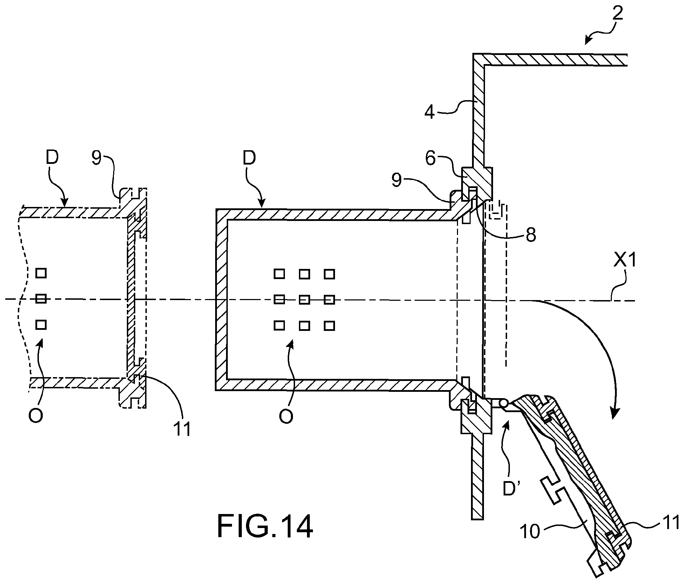

Le dispositif de connexion étanche D comporte une bride 6 montée dans la paroi 4 et délimitant une ouverture 8, une porte 10 destinée à fermer de manière étanche l'ouverture 8. Le dispositif de connexion étanche D comporte également des moyens de connexion à un système extérieur, par exemple un conteneur C (figure 14), comportant également une bride 9 bordant une ouverture et une porte 11 fermant de manière étanche ladite ouverture. Les moyens de connexion sont par exemple de type à baïonnette. Chaque porte est connectée à sa bride également par une connexion à baïonnette. Le dispositif de connexion présente une symétrie de révolution d'axe X1.

Dans un exemple de réalisation, le dispositif de connexion comporte également moyens de solidarisation des deux brides 6 et 9 l'une avec l'autre et une couronne de commande montée à l'extérieur de l'enceinte autour de la bride 6, la couronne de commande commandant des moyens de solidarisation des deux portes 10 et 11 et de déverrouillage de la porte 11 du conteneur C, des moyens de libération de l'autre porte et l'ouverture des deux portes 10 et 11 permettant la communication étanche entre les deux volumes. Les moyens de solidarisation des deux brides 6 et 9 et la couronne de commande sont mobiles en rotation par rapport à l'enceinte et au conteneur, et de par leur rotation assurent toutes les étapes requises pour obtenir une connexion étanche et ceci sans faire pivoter l'un des volumes clos. Dans cet exemple, aucune rotation du second volume clos n'est requise.

Dans un autre exemple de réalisation, la solidarisation des deux brides, des deux portes t l'ouverture des portes sont assurées par la rotation du conteneur autour de son axe et par rapport à l'enceinte.

Un exemple de mode opératoire pour connecter de manière étanche entre l'enceinte et un conteur va être brièvement décrit à l'aide de la figure 14. En pointillés est représenté le conteneur fermé avant sa connexion à l'enceinte. Le conteneur contient des objets O représentés schématiquement, que l'on souhaite transférer dans l'enceinte. Le système de transfert n'est pas représenté.

La bride 9 du conteneur est solidarisée de manière étanche à la bride 6 de l'enceinte au moyen d'une connexion à baïonnette. Simultanément la porte 11 du conteneur et la porte 10 de l'enceinte sont solidarisées l'une à l'autre de manière étanche par une connexion à baïonnette. Les faces extérieures des portes 10, 11 sont isolées par rapport au volume intérieur du conteneur et de l'enceinte, l'ensemble formée par les deux portes 10, 11 solidarisées l'une à l'autre peut être retiré en le faisant pivoter autour de son axe, et ensuite déplacer dans l'enceinte. Les deux volumes sont alors en communication de manière étanche et le transfert d'objets entre les deux volumes peut être réalisé.

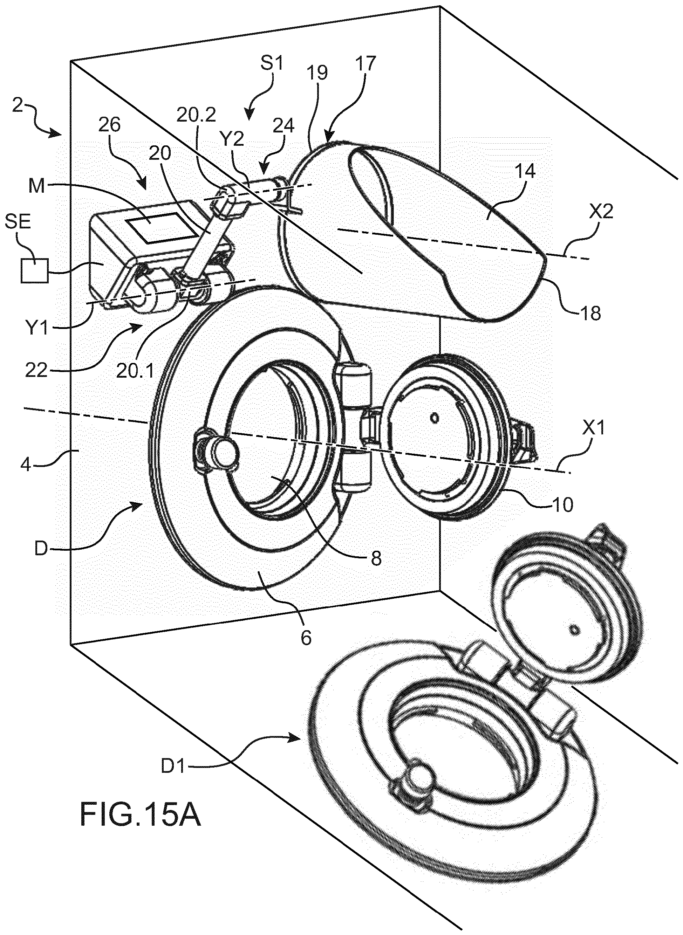

L'enceinte comporte un système de transfert S1 permettant de guider des objets venant de l'extérieur vers une zone du volume intérieur de l'enceinte. Par exemple ces objets sont des bouchons contenus dans un sac et qui sont déversés à l'intérieur de l'enceinte. Le système S1 est destiné à faciliter le traitement et/ou le transfert d'objets/ d'élément dans l'enceinte 2, par exemple à faciliter la fourniture d'objets/d'éléments à un tapis d'acheminement ou, lors d'un traitement ultérieur, de transfert dans un conteneur étanche séparé, à travers un autre dispositif de connexion étanche D1 tel que représenté sur la figure 15A.

Le système de transfert S1 comporte une pièce 14 assurant le guidage de l'écoulement des objets, désignée chute et formant une sorte d'entonnoir.

Dans l'exemple représenté, la chute 14 a sensiblement le profil d'un tronc de cône à section circulaire avec une grande base munie d'un rebord d'accostage 17 destiné à venir en contact la bride 6 et à border l'ouverture et la petite base 18, formant un rebord de déversement, orientée vers la zone où l'on souhaite orienter le ou les objets. Dans l'exemple représenté, le tronc de cône est coupé par un plan incliné par rapport à son axe de révolution X2 lui conférant une forme biseautée. La chute est destinée à prendre une position accostée dans laquelle le rebord d'accostage 17 est en appui contre la bride 16 et une position écartée, dite de repos, dans laquelle la chute 14 est écartée de l'ouverture et est en attente d'un nouveau transfert. De manière avantageuse, le bord d'accostage 17 est recouvert d'un bourrelet en matériau souple 19, par exemple en élastomère, pour éviter d'endommager la bride lors de l'accostage. Dans un exemple de réalisation, la chute 14 peut avoir une surface aval dans le sens d'écoulement des objets, qui soit inclinée par rapport à l'axe du rebord d'accostage 17 pour faciliter le transfert d'objets.

Dans l'exemple représenté, le système de transfert comporte également un bras 20 comportant une première extrémité longitudinale 20.1 et une deuxième extrémité longitudinale 20.2, une première articulation en rotation 22 d'axe Y1, par laquelle le bras est articulé en rotation sur la paroi 4 par sa première extrémité longitudinale 20.1, et une deuxième articulation en rotation 24 d'axe Y2, par laquelle le bras est articulé en rotation sur la paroi 4 par sa deuxième extrémité longitudinale 20.2. L'axe Y2 est parallèle à l'axe Y1.

Le système de transfert comporte également des moyens d'actionnement 26 pour entrainer en rotation le bras autour de l'axe Y1 et la chute autour de l'axe Y2. Dans cet exemple les moyens d'actionnement 26 comportent un moteur électrique M représenté schématiquement.

Selon le premier mode de réalisation, le système de transfert est tel qu'il maintient la chute dans une orientation donnée par rapport au dispositif de connexion D et donc à la paroi 6 le portant. L'orientation de la chute dans la présente demande correspond à l'axe du rebord d'accostage. Sur la figure 1, l'axe de la partie de la chute sur laquelle les objets se déplacent et l'axe du rebord d'accostage sont confondus. Dans d'autres exemples de réalisation, ils sont sécants. Le maintien de l'orientation de la chute par rapport au dispositif de connexion signifie que l'axe du rebord d'accostage et l'axe du dispositif de connexion présentent la même orientation angulaire l'un par rapport à l'autre, et/ou que l'axe du rebord d'accostage est orthogonal à l'axe de la paroi 4, quelle que soit la position de la chute dans l'enceinte, par exemple l'axe du rebord d'accostage est parallèle à celui du dispositif de connexion, quelle que soit la position de la chute dans l'enceinte. Dans les exemples représentés, le plan contenant l'ouverture du dispositif de connexion étanche et la paroi sont confondus. Dans d'autres exemples, la paroi s'étend dans au moins deux plans inclinés, une partie de la paroi contenant le dispositif de connexion étanche est dans un plan différent de la ou des autres parties de la paroi, le maintien de l'orientation peut alors être celle entre l'axe du rebord d'accostage et la partie de la paroi contenant le dispositif de connexion étanche ou celle de l'axe du rebord d'accostage et l'autre partie de la paroi. Dans d'autres exemples, le dispositif de connexion étanche est monté dans une paroi inclinée, l'ouverture étant dans un plan distinct de celui de toute la paroi, le maintien de l'orientation est alors réalisé entre l'axe du rebord d'accostage et celui du dispositif de connexion ou entre l'axe du rebord d'accostage et celui de la paroi inclinée. Le maintien de l'orientation est donc celle de l'axe du rebord d'accostage par rapport à un élément de l'enceinte.

Dans cet exemple de réalisation représenté sur les figures 1 à 4, et de manière très avantageuse, les moyens mécaniques sont tels qu'ils assurent un maintien de l'axe X2 du rebord d'accostage 17 parallèlement à l'axe X1 du dispositif de connexion et perpendiculaire à la paroi 4. Ainsi lors de l'accostage le rebord d'accostage 14 arrive parallèlement à la bride et tout le rebord d'accostage entre en contact avec la bride 6 de manière simultanée ou quasi-simultanée. En position repos, le rebord d'accostage 17 se rapproche de la paroi 4 et le rebord de déversement 18 est orienté vers l'intérieur de l'enceinte.

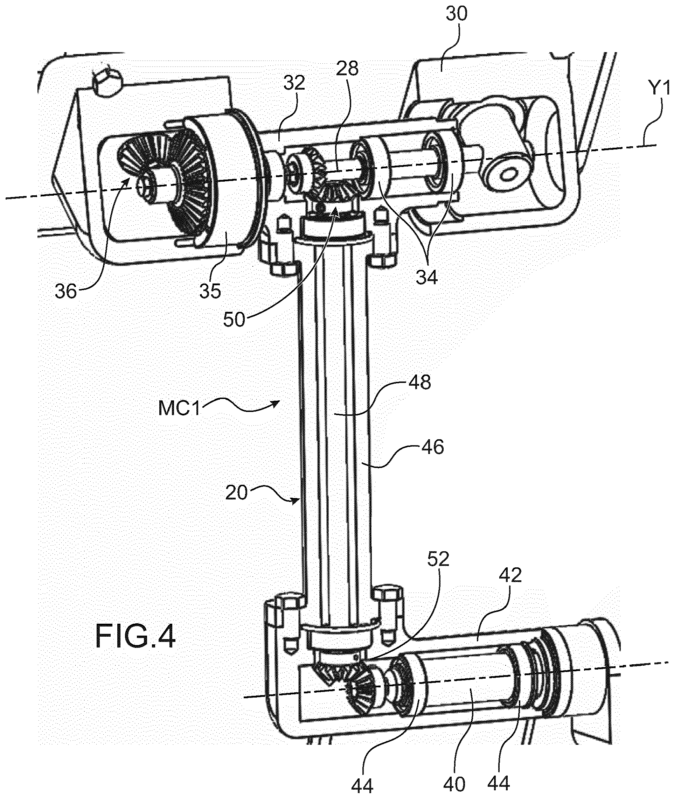

Dans le premier exemple de réalisation, le maintien de l'orientation de la chute est réalisé par des moyens mécaniques MC1 visibles sur la figure 4.

Les moyens mécaniques MC1 comportent un premier axe intérieur 28 d'axe Y1 monté fixe sur une platine 30 destinée à être fixée sur la paroi 4 de l'enceinte, un premier axe extérieur 32 concentrique au premier axe intérieur 28 et l'entourant, monté mobile en rotation autour de le premier axe intérieur 28 au moyen de paliers 34. Des paliers 35 sont également prévus entre le premier arbre extérieur 32 et un carter 37 formant logement. Le premier axe extérieur 32 est destiné à être entrainé par le moteur M. Dans l'exemple représenté, un renvoi d'angle à roue conique 36 transmet la rotation de l'arbre du moteur M au premier axe extérieur 32. En variante, l'arbre du moteur est parallèle ou aligné avec l'axe extérieur.

Les moyens mécaniques MC1 comportent également un deuxième axe intérieur 40 solidaire en rotation de la chute 14 et monté dans un deuxième axe extérieur 42, et formant la deuxième articulation en rotation. Des paliers 44 sont prévus entre le deuxième axe intérieur 40 et le deuxième axe extérieur 42. Le bras 20 comporte un arbre extérieur 46 reliant rigidement le premier axe extérieur 32 et le deuxième axe extérieur 42, et un arbre intérieur 48 reliant mécaniquement le premier axe intérieur 28 et le deuxième axe intérieur 40 et assure le maintien en position de la chute 14.

L'arbre intérieur 48 est relié mécaniquement au premier axe intérieur 28 par un renvoi d'angle 50 et au deuxième arbre intérieur 40 par un deuxième renvoi d'angle 52. Dans cet exemple le renvoi d'angle 52 est à une extrémité longitudinale du deuxième axe intérieur 40. En variante le renvoi d'angle 52 est situé dans une position intermédiaire du deuxième axe intérieur 40.

L'ensemble des éléments mécaniques du système de transfert est caréné pour limiter l'émission de particules vers l'intérieur de l'enceinte due au frottement. En outre, un tel carénage facilite les étapes de nettoyage de l'intérieur de l'enceinte. Le carénage individuel à chaque pièce ou organe mécanique et/ou commun à plusieurs pièces ou organes mécaniques.

Le fonctionnement de ces moyens mécaniques MC1 va maintenant être décrit.

Le moteur électrique M est activé, il entraîne en rotation le premier arbre extérieur 32 autour de l'axe Y1 librement par rapport au premier axe intérieur 28, ce qui entraîne en rotation l'arbre extérieur 46 et le deuxième axe extérieur 42. Du fait de la liaison assurée par l'arbre intérieur 48 et les renvois d'angles, l'orientation du deuxième axe intérieur 40 est maintenu fixe tout en pivotant par rapport à l'axe Y1.

Ainsi la chute 14 qui est fixe par rapport au deuxième axe intérieur 40 a une orientation fixe tout en se déplaçant dans la cellule.

Le fonctionnement du système de transfert va maintenant être décrit.

Les portes de l'enceinte et du conteneur solidarisées l'une à l'autre ont été retirées du dispositif de connexion.

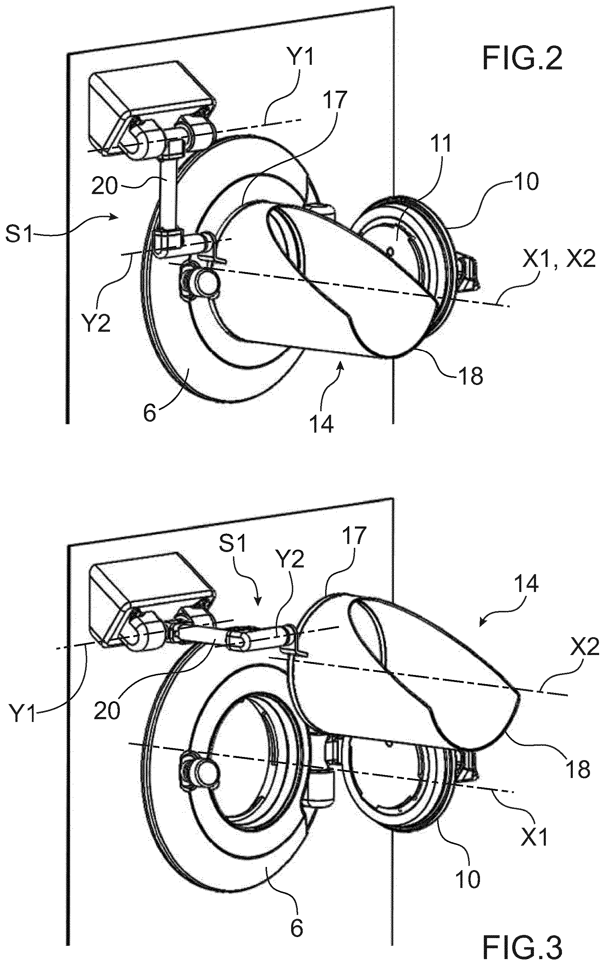

Le moteur électrique M est activé, le bras 20 pivote autour de l'axe Y1, provoquant un rapprochement du bras 20 vers la paroi 40. La chute 14, et en particulier le rebord d'accostage 17, se rapproche de la bride 6 parallèlement à celle-ci du fait des moyens mécaniques MC1 jusqu'à venir en contact avec la bride 6 et à border l'ouverture. La chute est en position d'accostage (figure 3).

Lorsque l'on souhaite retirer la chute, par exemple pour pouvoir remettre en place les portes, le moteur est activé et tourne en sens inverse. Le bras 20 pivote autour de l'axe Y1 en sens inverse. Dans une première phase, le bras s'éloigne de la paroi 4 (figure 3). Le rebord d'accostage 17 s'écarte de la bride 6, tout en restant parallèle à celle-ci. Dans une deuxième phase le bras 20 se rapproche de la paroi 4 et le rebord d'accostage 17 se rapproche de la paroi 4 parallèlement à celle-ci et atteint sa position de repos (figure 2).

Le rebord de déversement est orienté vers l'intérieur de l'enceinte de sorte que la place requise pour loger la chute en position repos est réduite par rapport à une chute en position verticale dans la représentation de la figure 1, dans ce cas il faudrait prévoir une enceinte de plus grande hauteur.

L'activation du moteur électrique peut être automatique suite à la survenance d'un événement extérieur, par exemple suite à la détection de la connexion d'un conteneur et à l'ouverture des portes. Dans un autre exemple, le moteur est activé manuellement par un utilisateur par l'intermédiaire d'une commande utilisateur extérieure ou d'une interface de commande de l'utilisateur.

Dans cet exemple, la position repos de la chute est située au-dessus du dispositif de connexion. En variante, la position de repos est située au-dessous du dispositif de connexion ou latéralement par rapport au dispositif de connexion.

Dans un exemple de réalisation, la chute comporte une partie aval réalisée de sorte à pouvoir être mise en rotation sur elle-même pour faciliter la chute des objets/éléments à transférer et s'assurer que tous les objets/éléments ont été transférer vers la ligne d'acheminement par exemple. Par exemple, la mise en rotation peut être activée dès l'activation du système, ou dès que sa mise en place par rapport au dispositif de connexion en vue d'un transfert est terminée ou en au-delà d'un certain temps pour provoquer le transfert des objets/éléments restant éventuellement sur la chute.

De manière très avantageuse, le système de transfert comporte des moyens de détection SE de la position de la chute ou plus généralement de l'état du système de transfert. De manière très avantageuse, les informations émises par ces moyens de détection sont fournies à une unité de contrôle, qui comparent à l'état d'ouverture et de fermeture du dispositif de connexion afin d'empêcher toute mise en place de la chute 14 si les portes sont en position fermée, ou toute remise en place de portes sur les brides, sur la chute 14 est en position d'accostage. Les moyens de détection SE comportent par exemple un capteur inductif ou une roue codeuse par exemple disposée au niveau du premier axe extérieur 32. Le dispositif de connexion de l'état de la technique comporte en général des moyens indiquant son état, par exemple si les portes sont en place ou non, en position verrouillée ou non... Les moyens de détection peuvent comporter un ou des capteurs optiques détectant si l'ouverture est dégagée ou fermée. Les capteurs peuvent par exemple fournir des informations directement à l'unité de contrôle associée fonctionnellement et/ou connecté au moteur électrique pour annuler toute activation du moteur lorsque le capteur détection que l'ouverture est bloquée par la porte 10 ou par un autre objet. Dans un autre exemple de réalisation le ou les capteurs sont utilisés pour l'activation automatique du moteur électrique M. Dans un autre exemple de réalisation, le ou les capteurs sont utilisés pour détecter et vérifier la position et/ou l'orientation angulaire de la chute.

Dans un exemple de réalisation, des moyens manuels d'actionnement du système de transfert est prévu, par exemple en cas de panne du moteur électrique. Par exemple ils comportent levier disposé à l'extérieur de l'enceinte et traverse la paroi 4 de manière étanche et est relié mécaniquement au premier axe extérieur 32, et des moyens pour débrayer le moteur. Le levier extérieur est solidarisé en rotation au premier axe extérieur 28 à travers la paroi. L'axe Y2 forme également l'axe de rotation du levier. Lorsque le levier est mis en rotation par exemple par l'utilisateur, il met simultanément en rotation le premier axe extérieur 28. La suite du fonctionnement du système est similaire à celui décrit ci-dessus avec le moteur électrique. Le passage de la position repos à la position accosté est obtenu en déplaçant le levier dans un sens de rotation. Le déplacement en rotation en sens inverse provoque le passage de la position accostée à la position repos.

En variante, l'actionnement du système de transfert est réalisé de manière manuelle exclusivement, par exemple à l'aide du levier décrit ci-dessus.

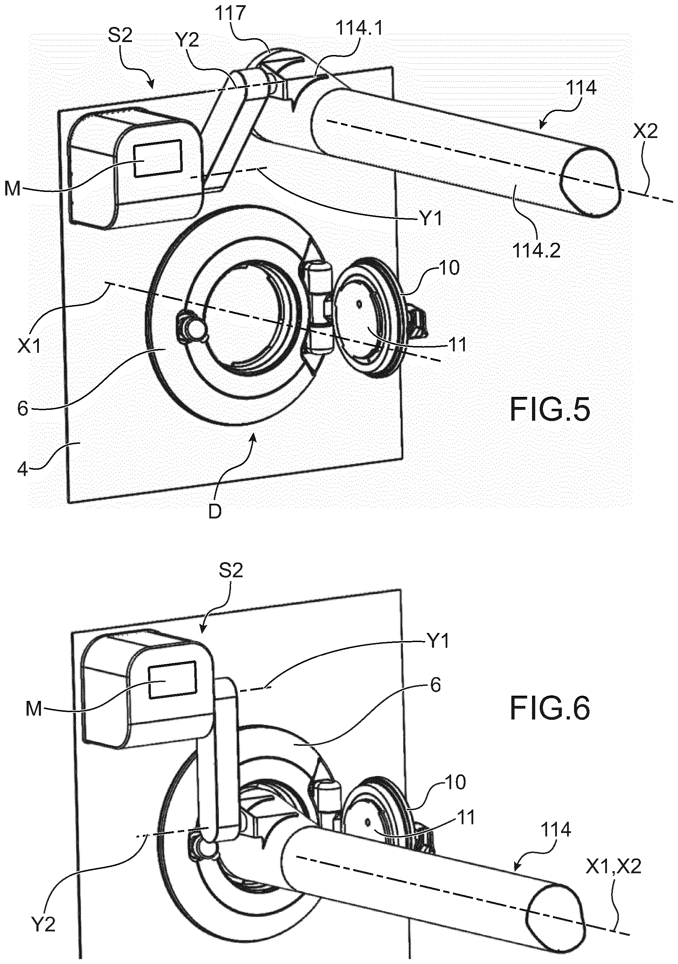

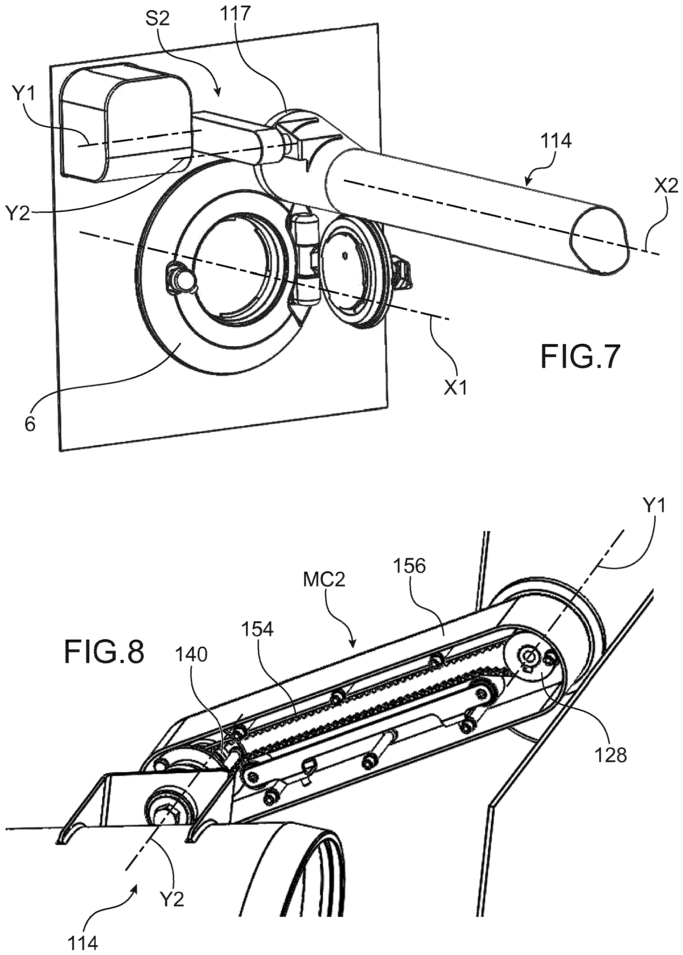

Sur les figures 5 à 8, on peut voir un deuxième exemple selon le premier mode de réalisation du système de transfert S2. Celui-ci diffère du système de transfert selon le premier exemple réalisation principalement par la forme de la chute et part les moyens assurant le maintien de l'orientation de la chute.

Le système de transfert S2 comporte une chute 114 comprenant une première partie 114.1 de forme tronconique portant le rebord d'accostage 117 et une deuxième partie 114.2 de forme tubulaire bordant le rebord de déversement.

Le diamètre du rebord d'accostage 117 est inférieur à celui de la bride et qui se loge dans l'ouverture.

La chute présente une grand dimension axiale et permet de guider les objets plus à l'intérieur de l'enceinte que la chute 14.

Le système de transfert comporte également des moyens mécaniques MC2 assurant un maintien de l'orientation de la chute.

Le moyens mécanique MC2 comportent une courroie dentée 154 entre le premier axe intérieur 128 et le deuxième axe intérieur 140, le premier 128 et le deuxième 140 axes intérieurs étant des axes cannelés. La courroie 154 assure le maintien de l'orientation du deuxième axe intérieur 140 et donc le maintien de l'orientation de la chute.

Les moyens mécaniques MC2 sont confinés dans un carénage 156 limitant les risques de rejet de particules vers le volume intérieur de l'enceinte. Cet exemple de réalisation présente l'avantage d'offrir un fonctionnement plus silencieux du fait de l'usage d'une courroie crantée, qui est généralement en matériau synthétique. Des rouleaux en appui contre la courroie sont mis en œuvre pour assurant un réglage de sa tension.

En variante, la courroie crantée est remplacée par une chaîne et des pignons coaxiaux aux axes intérieurs sont fixés sur ceux-ci.

Les étapes de fonctionnement du système de transfert sont similaires à celles décrites ci-dessus pour le système des figures 1 à 4.

Le système de transfert de la demande est particulièrement intéressant dans le cas où la chute présente une très grande dimension le long de son axe X1. En effet, elle permet de réduire considérablement la hauteur de l'enceinte, par rapport à une enceinte équipée d'un système de transfert de l'état de la technique.

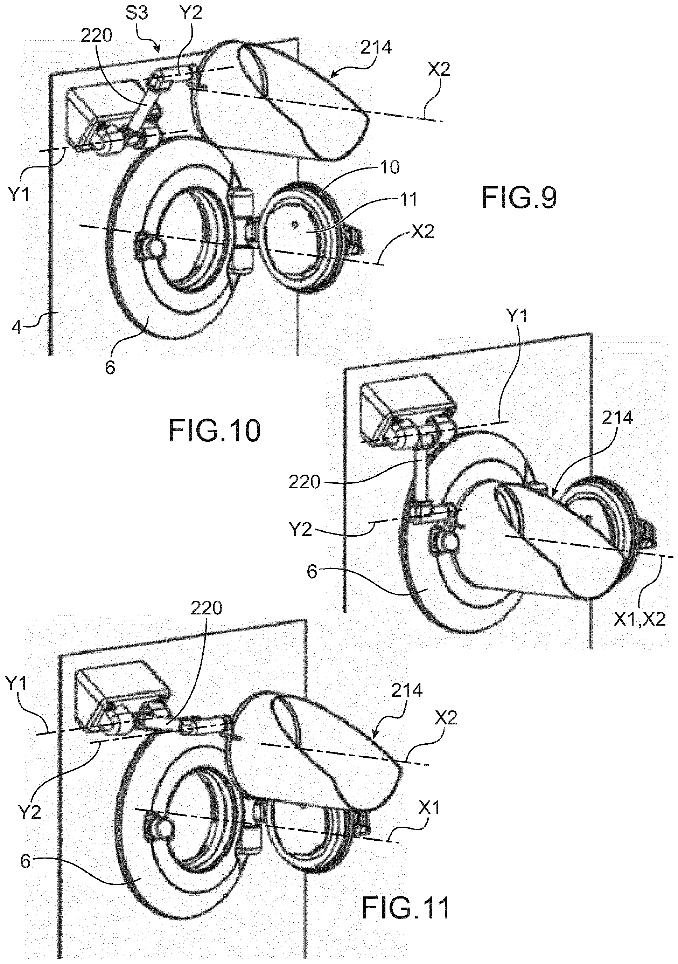

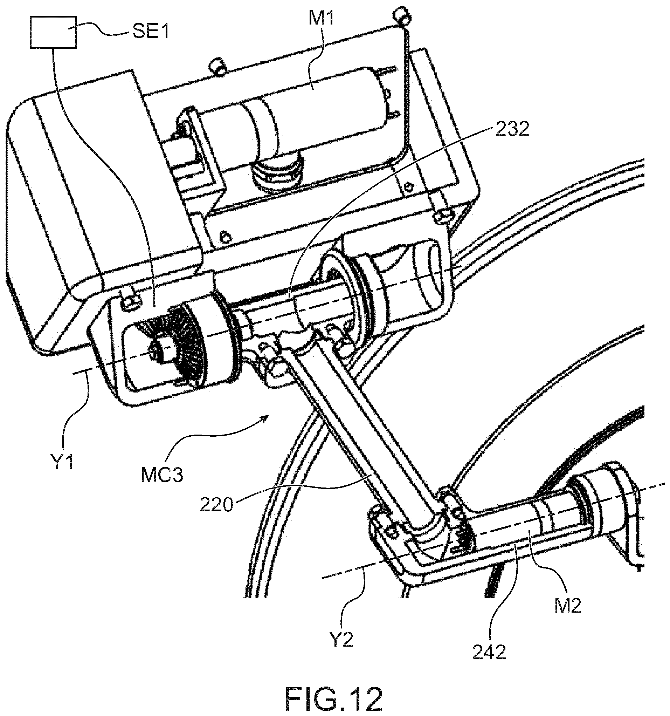

Sur les figures 9 à 12, on peut voir un troisième exemple de réalisation du premier mode de réalisation d'un système de transfert S3 mettant en œuvre deux moteurs électriques.

Le système de transfert S3 comporte un premier moteur électrique M1 monté sur la paroi 4 similaire au moteur M, et connecté mécaniquement au premier axe extérieur 232 afin de l'entraîner en rotation autour de l'axe Y1. Il comporte un arbre extérieur et un deuxième axe extérieur 242, dans lequel est monté un deuxième moteur électrique M2 sur l'arbre duquel est montée solidaire en rotation la chute 214.

Le moteur M2 est alors commandé pour maintenir l'orientation de la chute 214 par rapport à l'axe du dispositif de connexion quelle que soit l'orientation du bras 220 par rapport à la paroi 4. Au moins un capteur de position angulaire SE1 est mis en œuvre pour mesurer la position angulaire du bras autour de l'axe Y1, de sorte que l'unité de contrôle corrige l'orientation angulaire de la chute 214 par rapport au deuxième axe extérieur 242. En variante, un capteur de position angulaire est mis en œuvre pour mesurer la position angulaire de l'axe X2 du rebord d'accostage X2 de la chute 214 par rapport à Y2 et l'unité de contrôle corrige cette orientation.

Les moyens pour alimenter électriquement le deuxième moteur M2 ne sont pas représentés à des fins de clarté, mais ils comportent par exemple des fils électriques reliant les bornes du deuxième moteur électrique M2 et une source de courant électrique, et courant dans le bras 20 qui est vide dans ce mode de réalisation.

Ce troisième exemple de réalisation présente l'avantage de réduire les pièces mécaniques en mouvement, ce qui réduit les risques de génération de particules par abrasion.

Dans un autre exemple de réalisation, on peut envisager que les premier 232 et deuxième 242 axes extérieurs ne soient pas toujours parallèles au cours du transfert. Par exemple, lors de l'accostage et pendant le transfert les axes 232 et 242 sont parallèles, et lors du désaccostage la chute est inclinée vers le bas pour assurer que tous les objets ont bien été transférés et qu'il n'en reste plus sur la chute, avant de repositionner le système de transfert dans sa position repos.

Selon une caractéristique supplémentaire, le système de transfert peut comporter des moyens qui sont mis en œuvre pour bloquer le système de transfert au moins en position d'accostage et en position de repos pour éviter tout déplacement non contrôlé. Les moyens de blocage comportent par exemple un frein électrique par exemple pour freiner la rotation du premier axe extérieur 21 dans le premier exemple de réalisation, ou des moyens mécaniques empêchant par exemple le premier axe extérieur 32 de pivoter autour de l'axe Y1, par exemple il peut s'agir d'un pion rétractable pénétrant dans le premier axe extérieur 32 perpendiculairement à celui-ci et empêchant sa rotation tant que le moteur n'est pas réactivé.

Dans les modes de réalisation décrits en détail, l'orientation de la chute est maintenue de sorte que le rebord d'accostage se déplace en permanence dans des plans parallèle au dispositif de connexion et orthogonaux à l'axe X1 du dispositif de connexion. En variante, il peut être déplacé dans un plan incliné. En effet dans le cas du deuxième exemple de réalisation, le rebord d'accostage pénètre dans l'ouverture de la bride, il n'est alors pas nécessaire que le rebord d'accostage soit en parallèle à la bride.

Dans un autre mode de réalisation, l'orientation de la chute n'est pas maintenue et la chute peut présenter au moins une première orientation lors de son éloignement ou son rapprochement du dispositif de connexion et une deuxième orientation lors de l'accostage, au moment duquel le rebord d'accostage peut se positionner parallèlement à la bride. En position repos, l'axe de la chute peut être incliné par rapport à la paroi supérieure, offrant néanmoins un encombrement réduit par rapport au système de transfert de l'état de la technique.

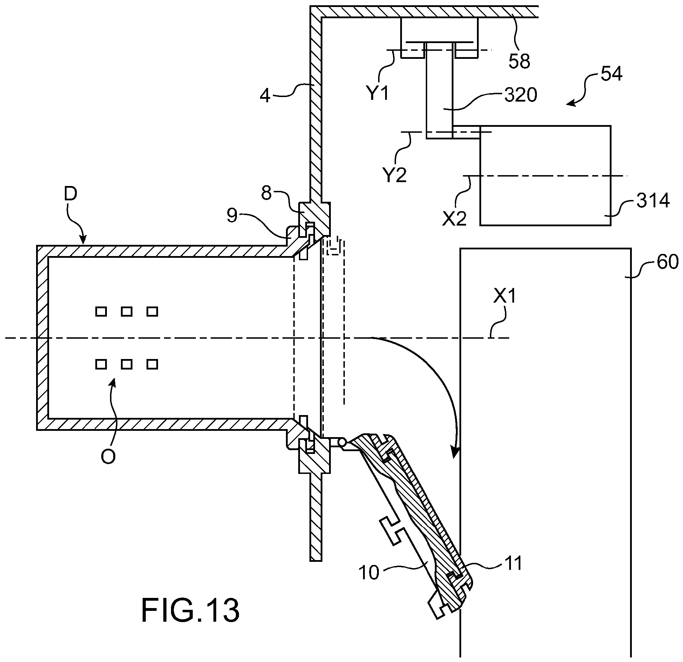

Dans les exemples de réalisation représentés, le système de transfert est fixé sur la paroi portant le dispositif de connexion. Sur la figure 13, on peut voir un exemple de réalisation dans lequel le système de transfert S4 est fixé à une paroi autre que la paroi portant le dispositif de connexion, par exemple une paroi 58 adjacente à la paroi 4. Le système est en position accostée. Du fait de l'articulation en rotation en l'arbre 320 et la chute 314, une telle configuration est rendue possible. Dans ce deuxième mode de réalisation, la chute n'est pas maintenue selon une orientation donnée par rapport au dispositif de connexion. Le troisième exemple de réalisation représenté sur les figures 9 à 12 mettant en œuvre deux moteurs est particulièrement adapté au deuxième mode de réalisation, en effet l'orientation de la chute étant commandée par le moteur, il suffit de piloter le deuxième moteur M2 de manière adéquate pour modifier l'orientation de la chute au cours de l'actionnement du système de transfert.

Dans l'exemple de la figure 13 une ligne de transfert 60, sur laquelle on souhaite acheminer les objets, est représentée.

Les moyens de détection de la position/ état du système de transfert et de l'état du dispositif de connexion peuvent être mis en œuvre dans tous les exemples de réalisation.

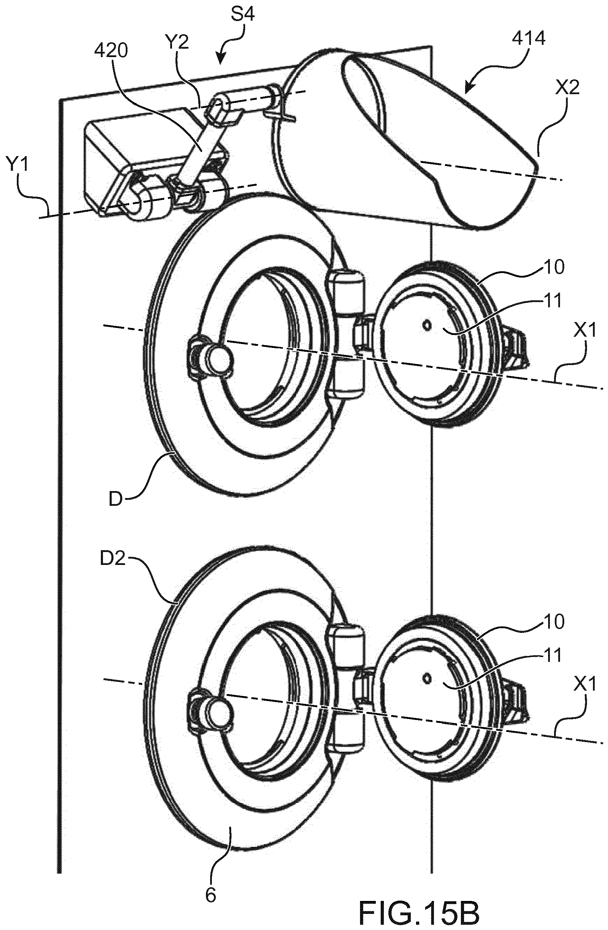

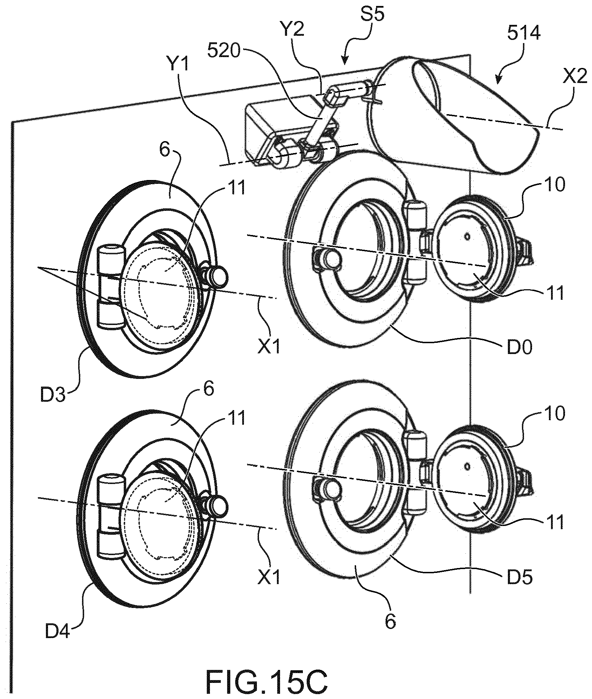

Sur les figures 15A à 15C, on peut voir des exemples d'enceintes étanches comportant plusieurs dispositifs de connexion sur la même paroi ou sur des parois différents. Le système de transfert peut être utilisé pour accoster plusieurs dispositifs de connexion. Sur la figure 15A, l'enceinte comporte un deuxième dispositif D1 dans une paroi perpendiculaire à la paroi 2 comportant le dispositif de connexion D. sur la figure 15B, l'autre dispositif D2 est dans la même cloison 2, le système de transfert S1 peut alors être utilisé pour transférer des objets provenant de conteneur connecté au dispositif D ou D1. Sur la figure 15C, tous les dispositifs D et D3 à D5 sont sur la même paroi, le système de transfert peut être utilisé ou non avec tout ou partie des dispositifs D3 à D5.L'enceinte peut comporter plusieurs dispositifs de connexion répartis sur une ou plusieurs parois et plusieurs systèmes de transfert.

Dans les exemples représentés, les chutes ont sensiblement des formes de révolution et le rebord d'accostage et le rebord de déversement sont dans plans sensiblement parallèles. En variante le rebord d'accostage et le rebord de déversement sont dans des plans non parallèles, la chute ayant un axe incliné par rapport à l'axe du rebord d'accostage, par exemple pour guider les objets vers le fond de l'enceinte.

Dans un autre exemple de réalisation, le système de transfert comporte plusieurs bras articulés les uns par rapport aux autres entre la première articulation pivot et la deuxième articulation pivot.

Le système de transfert selon la présente description s'applique à des enceintes comportant tout type de dispositif de connexion étanche et pas seulement ceux mettant en œuvre de moyens de connexion à baïonnette. Le ou les dispositifs de connexion étanche peuvent mettre en œuvre des pions rétractables, des cliquets, être du type magnétique...

Les objets décrits dans cette demande peuvent être mis en œuvre dans tous les domaines techniques requérant un transfert d'objets entre deux volumes clos et isolé de l'environnement extérieur.

## Revendications

1. Système de transfert pour enceinte étanche, ladite enceinte étanche définissant un premier volume clos et comportant au moins un dispositif de connexion étanche destiné à connecter le premier volume clos à un deuxième volume clos, ledit système de transfert étant destiné à être disposé dans ladite enceinte, ledit système de transfert comportant :
- au moins un bras destiné à être monté en rotation sur une paroi de de l'enceinte étanche par l'intermédiaire d'une première articulation en rotation (22) comportant un premier axe de rotation (Y1),
- une chute (14, 114, 214), ladite chute (14, 114, 214) comportant :
un rebord d'accostage (17, 117, 217) configuré pour coopérer avec le dispositif de connexion étanche; et
un rebord de déversement (18), et
- une deuxième articulation en rotation (24) entre le bras et la chute (14, 114, 214), ladite deuxième articulation en rotation (24) comportant un deuxième axe de rotation (Y2),

2. Système de transfert selon la revendication 1, dans lequel le premier axe de rotation (Y1) et le deuxième axe de rotation (Y2) sont parallèles.

3. Système de transfert selon la revendication 1 ou 2, comportant des moyens de maintien d'orientation pour maintenir l'orientation de la chute (14, 114, 214) lors de son déplacement dans ladite enceinte.

4. Système de transfert selon la revendication 3, dans lequel le rebord d'accostage comportant un axe longitudinal (X2), les moyens de maintien d'orientation sont tels que l'axe longitudinal (X2) du rebord d'accostage est aligné avec l'axe d'une ouverture du dispositif de connexion et/ou perpendiculaire à la paroi de l'enceinte dans laquelle est monté le dispositif de connexion étanche.

5. Système de transfert selon la revendication 3 ou 4, dans lequel les moyens de maintien d'orientation comportent des moyens mécaniques entre un premier axe intérieur (28) s'étendant selon le premier axe de rotation (Y1), et un deuxième axe intérieur (40) s'étendant selon le deuxième axe de rotation (Y2), ledit deuxième axe intérieur (40) étant solidaire en rotation de la chute (14).

6. Système de transfert selon la revendication 5, dans lequel les moyens mécaniques comportent un arbre intérieur (48) connecté au premier axe intérieur (28) et au deuxième axe intérieur (40) par des renvois d'angle (50, 52) , ou dans lequel les moyens mécaniques comportent une courroie dentée ou une chaine (154) engrenant le premier axe intérieur (138) et le deuxième axe intérieur (140), le premier axe intérieur (138) et le deuxième axe intérieur (140) étant cannelés.

7. Système de transfert selon l'une des revendications précédentes, comportant des moyens d'actionnement comprenant au moins un moteur électrique (M) pour mettre en rotation le système autour du premier axe de rotation (Y2) ou comportant un premier moteur électrique (M1) pour déplacer le bras autour du premier axe de rotation (Y1) et un deuxième moteur électrique (M2) pour déplacer la chute (214) autour du deuxième axe de rotation (Y2).

8. Système selon l'une des revendications 1 à 7, comportant des moyens de détection (S) de la configuration du système de transfert et/ou de l'état d'ouverture du dispositif de connexion.

9. Enceinte définissant un premier volume clos et comportant un dispositif de connexion étanche (D) à un deuxième volume clos, ledit dispositif de connexion (D) étant monté dans une paroi (4) de ladite enceinte et comportant avantageusement des moyens de connexion à baïonnette, et comportant un système de transfert selon l'une des revendications précédentes.

10. Enceinte selon la revendication précédente, dans laquelle la première articulation en rotation du système de transfert est fixée sur la paroi dans laquelle est monté le dispositif de connexion.

11. Procédé d'actionnement d'un système de transfert monté sur une paroi d'une enceinte définissant un premier volume clos et comportant un dispositif de connexion étanche à un deuxième volume clos, ledit dispositif de connexion étanche comportant une ouverture, ledit système de transfert comportant un chute munie d'un rebord d'accostage et articulée autour d'un premier axe de rotation (Y1) et d'un deuxième axe de rotation (Y2), ledit procédé d'actionnement comportant une phase de rapprochement de la chute du dispositif de connexion pour mettre la chute dans une position d'accostage, et une phase d'éloignement de la chute du dispositif de connexion pour mettre la chute dans une position de repos, lors de chacune des phases de rapprochement et d'éloignement la chute étant mise en rotation autour du premier axe de rotation (Y1) et autour du deuxième axe de rotation (Y2).

12. Procédé d'actionnement selon la revendication précédente, dans lequel la chute est mise en rotation simultanément autour du premier axe de rotation (Y1) et du deuxième axe de rotation (Y2) respectivement, avantageusement en phase de rapprochement et en phase d'éloignement, l'axe (X2) du rebord d'accostage reste parallèle à l'axe (X1) du dispositif de connexion.

13. Procédé d'actionnement selon 11 ou 12, dans lequel en position repos un rebord de déversement de la chute est orienté vers l'intérieur de l'enceinte.

14. Procédé de transfert d'objet entre un deuxième volume et le premier volume de l'enceinte selon la revendication 9 ou 10, comportant :
- une connexion du deuxième volume clos au dispositif de connexion,
- retrait des portes de l'enceinte et du deuxième volume clos.
- mise en place de la chute,
- transfert des objets du deuxième volume clos vers l'intérieur de l'enceinte.
- retrait de la chute,
- remise en place des portes.

15. Procédé de transfert selon la revendication 14, dans lequel la connexion est obtenue par rotation du deuxième volume clos par rapport à l'enceinte, de sorte à assurer une connexion entre des brides du deuxième volume clos et du dispositif de connexion et entre une porte du deuxième volume clos et la porte de l'enceinte, et/ou le procédé de transfert comportant une détection de la configuration du système de transfert et une détection de la position de portes et une émission d'un signal au système de transfert de rapprocher ou non la chute du dispositif de connexion.

## Patentansprüche

1. Transfersystem für ein dichtes Gehäuse, wobei das dichte Gehäuse ein erstes geschlossenes Volumen definiert und wenigstens eine dichte Verbindungsvorrichtung aufweist, die dazu bestimmt ist, das erste geschlossene Volumen mit einem zweiten geschlossenen Volumen zu verbinden, wobei das Transfersystem dazu bestimmt ist, in dem Gehäuse angeordnet zu werden, wobei das Transfersystem aufweist:
- wenigstens einen Arm, der dazu bestimmt ist, über ein erstes Drehgelenk (22), das eine erste Drehachse (Y1) aufweist, drehbar an einer Wand des dichten Gehäuses gelagert zu werden,
- eine Schurre (14, 114, 214), wobei die Schurre (14, 114, 214) aufweist:
einen Andockrand (17, 117, 217), der dafür ausgelegt ist, mit der dichten Verbindungsvorrichtung zusammenzuwirken; und
einen Schüttrand (18), und
- ein zweites Drehgelenk (24) zwischen dem Arm und der Schurre (14, 114, 214), wobei das zweite Drehgelenk (24) eine zweite Drehachse (Y2) aufweist.

2. Transfersystem nach Anspruch 1, wobei die ersten Drehachse (Y1) und die zweite Drehachse (Y2) parallel sind.

3. Transfersystem nach Anspruch 1 oder 2, welches Ausrichtungshaltemittel zum Aufrechterhalten der Ausrichtung der Schurre (14, 114, 214) bei ihrer Verlagerung in dem Gehäuse aufweist.

4. Transfersystem nach Anspruch 3, wobei, wenn der Andockrand eine Längsachse (X2) aufweist, die Ausrichtungshaltemittel so beschaffen sind, dass die Längsachse (X2) des Andockrandes mit der Achse einer Öffnung der Verbindungsvorrichtung fluchtet und/oder senkrecht zur Wand des Gehäuses ist, in welchem die dichte Verbindungsvorrichtung angebracht ist.

5. Transfersystem nach Anspruch 3 oder 4, wobei die Ausrichtungshaltemittel mechanische Mittel zwischen einer ersten inneren Achse (28), die sich entlang der ersten Drehachse (Y1) erstreckt, und einer zweiten inneren Achse (40), die sich entlang der zweiten Drehachse (Y2) erstreckt, aufweisen, wobei die zweite innere Achse (40) drehfest mit der Schurre(14) verbunden ist.

6. Transfersystem nach Anspruch 5, wobei die mechanischen Mittel eine innere Welle (48) aufweisen, die mit der ersten inneren Achse (28) und mit der zweiten inneren Achse (40) durch Winkeltriebe (50, 52) verbunden ist, oder wobei die mechanischen Mittel einen Zahnriemen oder eine Kette (154) aufweisen, der bzw. die mit der ersten inneren Achse (138) und mit der zweiten inneren Achse (140) in Eingriff steht, wobei die erste innere Achse (138) und die zweite innere Achse (140) gerillt sind.

7. Transfersystem nach einem der vorhergehenden Ansprüche, welches Betätigungsmittel aufweist, die wenigstens einen Elektromotor (M) umfassen, um das System um die erste Drehachse (Y2) in Rotation zu versetzen, oder einen ersten Elektromotor (M1), um den Arm um die erste Drehachse (Y1) zu bewegen, und einen zweiten Elektromotor (M2), um die Schurre (214) um die zweite Drehachse (Y2) zu bewegen, aufweist.

8. System nach einem der Ansprüche 1 bis 7, welches Mittel zur Detektion (S) der Konfiguration des Transfersystems und/oder des Öffnungszustands der Verbindungsvorrichtung aufweist.

9. Gehäuse, welches ein ersten geschlossenes Volumen definiert und eine Vorrichtung zur dichten Verbindung (D) mit einem zweiten geschlossenen Volumen aufweist, wobei die Verbindungsvorrichtung (D) in einer Wand (4) des Gehäuses angebracht ist und vorteilhafterweise Bajonettverbindungsmittel aufweist, und ein Transfersystem nach einem der vorhergehenden Ansprüche aufweist.

10. Gehäuse nach dem vorhergehenden Anspruch, wobei das erste Drehgelenk des Transfersystems an der Wand befestigt ist, in welcher die Verbindungsvorrichtung angebracht ist.

11. Verfahren zur Betätigung eines Transfersystems, das an einer Wand eines Gehäuses angebracht ist, das ein ersten geschlossenes Volumen definiert und eine Vorrichtung zur dichten Verbindung mit einem zweiten geschlossenen Volumen aufweist, wobei die dichte Verbindungsvorrichtung eine Öffnung aufweist, wobei das Transfersystem eine Schurre aufweist, die mit einem Andockrand versehen ist und um eine erste Drehachse (Y1) und eine zweite Drehachse (Y2) gelenkig gelagert ist, wobei das Verfahren zur Betätigung eine Phase der Annäherung der Schurre an die Verbindungsvorrichtung, um die Schurre in eine Andockposition zu bringen, und eine Phase des Entfernens der Schurre von der Verbindungsvorrichtung, um die Schurre in eine Ruheposition zu bringen, umfasst, wobei die Schurre in jeder der Phasen der Annäherung und des Entfernens in Rotation um die erste Drehachse (Y1) und um die zweite Drehachse (Y2) versetzt wird.

12. Verfahren zur Betätigung nach dem vorhergehenden Anspruch, wobei die Schurre in Rotation gleichzeitig um die erste Drehachse (Y1) und die zweite Drehachse (Y2) versetzt wird, vorteilhafterweise in der Phase der Annäherung und der Phase des Entfernens, wobei die Achse (X2) des Andockrandes parallel zur Achse (X1) der Verbindungsvorrichtung bleibt.

13. Verfahren zur Betätigung nach Anspruch 11 oder 12, wobei in der Ruheposition ein Schüttrand der Schurre zum Inneren des Gehäuses hin ausgerichtet ist.

14. Verfahren zum Transfer eines Objekts zwischen einem zweiten Volumen und dem ersten Volumen des Gehäuses nach Anspruch 9 oder 10, welches umfasst:
- ein Verbinden des zweiten geschlossenen Volumens mit der Verbindungsvorrichtung,
- Zurückziehen der Türen des Gehäuses und des zweiten geschlossenen Volumens,
- Anbringung der Schurre,
- Transfer der Objekte vom zweiten geschlossenen Volumen zum Inneren des Gehäuses,
- Zurückziehen der Schurre,
- Zurückbewegen der Türen an ihren Platz.

15. Verfahren zum Transfer nach Anspruch 14, wobei die Verbindung durch Drehung des zweiten geschlossenen Volumens in Bezug auf das Gehäuse hergestellt wird, derart, dass eine Verbindung zwischen Flanschen des zweiten geschlossenen Volumens und der Verbindungsvorrichtung und zwischen einer Tür des zweiten geschlossenen Volumens und der Tür des Gehäuses sichergestellt wird, und/oder wobei das Verfahren zum Transfer eine Detektion der Konfiguration des Transfersystems und eine Detektion der Position der Türen und ein Senden eines Signals an das Transfersystem, die Schurre an die Verbindungsvorrichtung anzunähern oder nicht, umfasst.

## Claims

1. Transfer system for sealed enclosure, said sealed enclosure defining a first closed volume and comprising at least one device for sealed connection intended to connect the first closed volume to a second closed volume, said transfer system being intended to be arranged in said enclosure, said transfer system comprising:
- at least one arm intended to be rotationally mounted on a wall of the sealed enclosure through a first rotating hinge (22) comprising a first axis of rotation (Y1),
- a chute (14, 114, 214), said chute (14, 114, 214) comprising:
a docking edge (17, 117, 217) configured to cooperate with the device for sealed connection; and
a pouring edge (18), and
- a second rotating hinge (24) between the arm and the chute (14, 114, 214), said second rotating hinge (24) comprising a second axis of rotation (Y2),

2. Transfer system according to claim 1, in which the first axis of rotation (Y1) and the second axis of rotation (Y2) are parallel.

3. Transfer system according to claim 1 or 2, comprising orientation maintaining means for maintaining the orientation of the chute (14, 114, 214) during its displacement in said enclosure.

4. Transfer system according to claim 3, in which the docking edge comprising a longitudinal axis (X2), the orientation maintaining means are such that the longitudinal axis (X2) of the docking edge is aligned with the axis of an opening of the connection device and/or perpendicular to the wall of the enclosure in which is mounted the device for sealed connection.

5. Transfer system according to claim 3 or 4, in which the orientation maintaining means comprise mechanical means between a first interior axis (28) extending along the first axis of rotation (Y1), and a second interior axis (40) extending along the second axis of rotation (Y2), said second interior axis (40) being rotationally coupled to the chute (14).

6. Transfer system according to claim 5, in which the mechanical means comprise an interior shaft (48) connected to the first interior axis (28) and to the second interior axis (40) by angle transmissions (50, 52), or in which the mechanical means comprise a toothed belt or a chain (154) meshing with the first interior axis (138) and the second interior axis (140), the first interior axis (138) and the second interior axis (140) being splined.

7. Transfer system according to one of the preceding claims, comprising actuating means including at least one electric motor (M) for rotating the system around the first axis of rotation (Y2) or comprising a first electric motor (M1) for displacing the arm around the first axis of rotation (Y1) and a second electric motor (M2) for displacing the chute (214) around the second axis of rotation (Y2).

8. Transfer system according to one of claims 1 to 7, comprising means for detecting (S) the configuration of the transfer system and/or the opening state of the connection device.

9. Enclosure defining a first closed volume and comprising a device for sealed connection (D) to a second closed volume, said connection device (D) being mounted in a wall (4) of said enclosure et comprising advantageously bayonet connection means, and comprising a transfer system according to one of the preceding claims.

10. Enclosure according to the preceding claim, in which the first rotating hinge of the transfer system is fixed on the wall in which is mounted the connection device.

11. Actuating method for actuating a transfer system mounted on a wall of an enclosure defining a first closed volume and comprising a device for sealed connection to a second closed volume, said device for sealed connection comprising an opening, said transfer system comprising a chute provided with a docking edge and hinged around a first axis of rotation (Y1) and a second axis of rotation (Y2), said actuating method comprising a coming closer phase during which the chute comes closer to the connection device to place the chute in a docking position, and a coming away phase during which the chute comes away from the connection device to place the chute in a rest position, during each of the phases of coming closer and of moving away the chute being rotated around the first axis of rotation (Y1) and around the second axis of rotation (Y2).

12. Actuating method according to the preceding claim, in which the chute is rotated simultaneously around the first axis of rotation (Y1) and the second axis of rotation (Y2) respectively, advantageously in the coming closer phase and in the moving away phase, the axis (X2) of the docking edge remains parallel to the axis (X1) of the connection device.

13. Actuating method according to claim 11 or 12, in which in rest position a pouring edge of the chute is oriented towards the interior of the enclosure.

14. Transfer method for transferring objects between a second volume and the first volume of the enclosure according to claim 9 or 10, comprising:
- a connection of the second closed volume to the connection device,
- removal of the doors of the enclosure and the second closed volume,
- putting in place the chute,
- transfer of the objects from the second closed volume to the interior of the enclosure,
- removal of the chute,
- putting the doors back in place.

15. Transfer method according to claim 14, in which the connection is obtained by rotation of the second closed volume with respect to the enclosure, so as to ensure a connection between the flanges of the second closed volume and the connection device and between a door of the second closed volume and the door of the enclosure, and/or the transfer method comprising a detection of the configuration of the transfer system and a detection of the position of the doors and an emission of a signal to the transfer system to bring closer or not the chute of the connection device.
